# EUROPEAN PATENT APPLICATION

(11) **EP 1 911 803 A1**
(43) Date of publication of application: **16.04.2008**
(21) Application number: 06781780.9
(22) Date of filing: 27.07.2006
(51) Int. Cl.: C08L 23/10, B32B 27/32

(54) **POLYPROPYLENE RESIN COMPOSITION, FILM OR SHEET, STRETCHED FILM OBTAINED FROM SUCH FILM OR SHEET, MULTILAYER BODY, AND STRETCHED FILM OBTAINED FROM SUCH MULTILAYER BODY**

(30) Priority: 02.08.2005 JP 2005223536
(71) Applicant: Mitsui Chemicals, Inc., Tokyo 105-7117 (JP)
(72) Inventor: INOUE, Norihide c/o MITSUI CHEMICALS, INC., Ichihara-shi, Chiba; 2990108 (JP); KUROKI, Takayuki c/o MITSUI CHEMICALS, INC., Ichihara-shi, Chiba; 2990108 (JP)
(74) Representative: HOFFMANN EITLE
(86) International application number: PCT/JP2006/314869
(87) International publication number: WO 2007/015415

(57) **Abstract**

The present invention provides a polypropylene resin composition having good moldability and giving a film or a sheet that is excellent in transparency and heat-sealing properties.

A polypropylene resin composition of the present invention comprises 1 to 50 wt% of a propylene polymer (A) whose melting point Tm as measured with a differential scanning calorimeter (DSC) is 150°C or higher, 10 to 90 wt% of a propylene copolymer (B) whose melting point Tm is 100°C or higher and below 150°C, and 1 to 80 wt% of an olefin copolymer (C) whose melting point is 40°C or higher and below 100°C, comprising 50 mol% or more of a constitutional unit derived from either one of propylene or 1-butene (a) and 50 mol% or less of a constitutional unit derived from an α-olefin having 2 to 20 carbon atoms (b) other than the constitutional unit (a) (here, the sum of (a) and (b) is 100 mol%).

A film obtained from this resin composition is suitable as a packaging film for food and the like.

## Description

### Technical Field

The present invention relates to a polypropylene resin composition, a film or a sheet obtained therefrom, a stretched film obtained from the film or the sheet, a laminate and a stretched film obtained from the laminate.

### Background Art

Crystalline polypropylene is excellent in such mechanical properties as tensile strength, rigidity, surface hardness, impact strength, and cold resistance, such optical properties as gloss and transparency, and such food hygiene properties as nontoxicity and odorlessness, and others, and thus it is widely used especially in food packaging field.
As a method to improve heat-sealing properties of such crystalline polypropylene, multi- or mono-layer film composed of a heat-seal layer of polypropylene having a low melting point such as propylene/α-olefin copolymer is generally known.

In Japanese Patent Publication No. S61-42626, it is described that a film having excellent heat-sealing properties at low temperatures is obtained by using, as a heat-seal layer, a composition comprising polypropylene and propyelene/1-butene copolymer.
In Japanese Patent Laid-Open Publication No. H8-238733, it is disclosed that heat-sealing at a further lower temperature is possible by using propylene/1-butene copolymer having an even lower melting point.

However, although excellent heat-sealing properties at low temperatures may be obtained by using such a propylene copolymer having a low melting point as mentioned above, there have been problems that stickiness to a roll is generated when molding into a film or a sheet and poor appearance occurs in the obtained film.
[Patent Document 1] Japanese Patent Publication No. S61-42626
[Patent Document 2] Japanese Patent Laid-Open Publication No. H8-238733

### Disclosure of the Invention

### Problems to be Solved by the Invention

An object of the present invention is to provide a polypropylene resin composition, from which a film or a sheet that is excellent in moldability in forming a film or a sheet and also in heat-sealing properties at low temperatures and transparency is obtainable, a film or a sheet obtained from the polypropylene resin composition, a stretched film obtained from the film or the sheet, a laminate and a stretched film obtained from the laminate.

### Means for Solving the Problems

The present inventors have found that the above-mentioned problems can be solved by using a specific propylene polymer composition and thus accomplished the present invention.
That is to say, the present invention is a polypropylene resin composition (X) comprising 1 to 50 wt% of a propylene polymer (A) whose melting point Tm as measured with a differential scanning calorimeter (DSC) is 150°C or higher, 10 to 90 wt% of a propylene copolymer (B) whose melting point Tm is 100°C or higher and below 150°C, and 1 to 80 wt% of an olefin copolymer (C) whose melting point is 40°C or higher and below 100°C, comprising 50 mol% or more of a constitutional unit derived from either propylene or 1-butene (a) and 50 mol% or less of one or more selected from a constitutional unit derived from an α-olefin having 2 to 20 carbon atoms (b) other than the constitutional unit (a) (here, the sum of (a) and (b) is 100 mol%, and the sum of (A), (B), and (C) is 100 wt%).

Further, the present invention is a film or a sheet formed from the above-mentioned resin composition (X).
The thickness of the film or the sheet of the present invention is preferably between 0.1 and 2000 µm.
A stretched film of the present invention is prepared by stretching the film or the sheet mentioned above at least uniaxially by 1.5-fold or more.

A laminate of the present invention contains at least one layer comprising the polypropylene resin composition (X). In the laminate of the present invention, it is preferable that the layer of the polypropylene resin composition (X) is laminated on at least one side of a layer of crystalline polypropylene (Z).
In a laminate of the present invention, It is preferable that at least one layer of the outermost layers comprises the polypropylene resin composition (X).

A stretched film of the present invention is prepared by stretching the laminate at least uniaxially by 1.5-fold or more.

### Effect of the Invention

A propylene-based resin composition of the present invention provides a film or a sheet that is excellent in moldability in forming a film or a sheet and in heat-sealing properties at low temperatures and transparency.
In particular, when an olefin copolymer (C), which is a preferable embodiment of a propylene-based resin composition of the present invention, is a copolymer of propylene with an α-olefin having 4 to 20 carbon atoms, the propylene-based resin composition of the present invention is excellent in moldability in forming a film or a sheet and provides the film or the sheet which is excellent in heat-sealing properties at low temperatures and transparency, and is, in addition, relatively good in anti-blocking properties.

A film or a sheet obtained from the propylene-based resin composition of the present invention, a stretched film obtained from the film or the sheet, a laminate and a stretched film obtained from the laminate are excellent in heat-sealing properties at low temperatures and transparency.

### Best Mode for Carrying Out the Invention

A polypropylene resin composition of the present invention comprises 1 to 50 wt% of a propylene polymer (A) whose melting point Tm as measured with a differential scanning calorimeter (DSC) is 150°C or higher, 10 to 90 wt% of a propylene copolymer (B) whose melting point Tm is 100°C or higher and below 150°C, and 1 to 80 wt% of an olefin copolymer (C) whose melting point is 40°C or higher and below 100°C, comprising 50 mol% or more of a constitutional unit derived from either propylene or 1-butene (a) and 50 mol% or less of one or more selected from a constitutional unit derived from an α-olefin having 2 to 20 carbon atoms (b) other than the constitutional unit (a) (here, the sum of (a) and (b) is 100 mol%).

### [A propylene polymer (A)]

A propylene polymer (A) used as a constitutional component of the polypropylene resin composition of the present invention is a propylene homopolymer, or a random or a block copolymer of propylene with an α-olefin having a melting point Tm as measured with a differential scanning calorimeter (DSC) of 150°C or higher, preferably 152°C or higher, and more preferably 155°C or higher. As the propylene polymer (A), both of an isotactic polypropylene and a syndiotactic polypropylene can be used.

When the propylene polymer (A) is a copolymer, ethylene or an α-olefin having 4 to 20 carbon atoms may be used as the α-olefin, and ethylene, 1-butene, and 1-pentene are preferable.
A melt flow rate (hereinafter abbreviated as MFR) of the propylene polymer (A) as measured under a 2.16 kg load at 230°C in accordance with ASTM D-1238 is preferably 0.1 to 50 g/10 min and more preferably 0.5 to 30 g/10 min.

### [A propylene copolymer (B)]

A propylene copolymer (B) used as a constitutional component of the polypropylene resin composition of the present invention is a random copolymer of propylene with an α-olefin whose melting point Tm as measured with a differential scanning calorimeter (DSC) is 100°C or higher and below 150°C, preferably in the range of 105 to 148°C, and more preferably in the range of 110 to 145°C.

As an α-olefin used in the above-mentioned copolymer (B), ethylene or an α-olefin having 4 to 20 carbon atoms may be mentioned, and ethylene, 1-butene, and 1-pentene are preferable. A content of an α-olefin in the propylene copolymer (B) is preferably 85 to 99.5 mol% and more preferably 90 to 99 mol%.
MFR of the propylene copolymer (B) is preferably 0.1 to 50 ) g/10 min and more preferably 0.5 to 30 g/10 min.

The propylene polymer (A) and the propylene copolymer (B) can be manufactured by polymerizing propylene or copolymerizing propylene and other α-olefins typically in the presence of a catalyst mainly comprising a solid titanium catalyst and an organometallic compound, or a metallocene catalyst composed of a metallocene compound as one component.

### [Olefin copolymer (C)]

An olefin copolymer (C) used in the present invention has the melting point Tm as measured with DSC of 40°C or higher and below 100°C, preferably in the range of 40 to 95°C, and more preferably in the range of 50 to 90°C.

The olefin copolymer (C) used in the present invention comprises 50 mol% or more of a constitutional unit derived from either propylene or 1-butene (a) and 50 mol% or less of one or more selected from a constitutional unit derived from an α-olefin having 2 to 20 carbon atoms (b) other than the constitutional unit (a) (here, the sum of (a) and (b) is 100 mol%). As an example of such an olefin copolymer (C), a copolymer (C1) in which the component (a) is a constitutional unit derived from propylene and the component (b) is one or more selected from a constitutional unit derived from an α-olefin having 2 to 20 carbon atoms other than propylene may be mentioned. Here, a constitutional unit derived from 1-butene may be included in the component (b). Further, as the olefin copolymer (C), a copolymer (C2) comprising, for example, a constitutional unit derived from 1-butene for the component (a) and one or more selected from a constitutional unit derived from an α-olefin having 2 to 20 carbon atoms other than 1-butene for the component (b) may be mentioned. Here, a constitutional unit derived from propylene may be included in the component (b).

The olefin copolymer (C) can be obtained by copolymerizing propylene and other α-olefins by using a publicly known stereospecific catalyst, and especially a copolymer prepared by using a metallocene catalyst is preferable because a molded article prepared therefrom has less stickiness. In this case, a molecular weight distribution as measured by a gel permeation chromatography (GPC) is in the range of 1 to 3.
In the case where an olefin copolymer (C) is the aforementioned copolymer (C1), the α-olefin that is copolymerized with propylene is at least one kind selected from α-olefins having 2 to 20 carbon atoms, such as ethylene, 1-butene, 1-pentene, and the like (other than propylene), and 1-butene or a mixture mainly comprising 1-butene is preferable. A content of the constitutional unit derived from the α-olefin having 2 to 20 carbon atoms other than propylene in the propylene/α-olefin copolymer (C1) is preferably 5 to 50 mol% and more preferably 10 to 35 mol%, relative to 100 mol% of the total of propylene and the α-olefins having 2 to 20 carbon atoms other than propylene.

Such a propylene/α-olefin copolymer is obtained by using, for example, a catalyst described in the pamphlet of International Publication No. 2004/087775. It is preferable to use the propylene/α-olefin copolymer whose melting point Tm (°C) and content of a comonomer constitutional unit M (mol%) as measured by ¹³C-NMR spectrum is in the range of 146 exp (-0.022M) ≥ Tm ≥ 125 exp (-0.032M).

Melt flow rate (MFR) of the propylene/α-olefin copolymer (C1) as measured at 230°C under a 2.16 kg load in accordance with ASTM D-1238 is preferably 0.1 to 50 (g/10 min) and more preferably 1 to 20 (g/10 min).
In the case where the olefin copolymer (C) is the aforementioned copolymer (C2), the α-olefin copolymerized with 1-butene is at least one kind selected from α-olefins having 2 to 20 carbon atoms, such as ethylene, propylene, 1-pentene and the like (other than 1-butene) and ethylene or propylene is preferable, while ethylene is particularly preferable. A content of the constitutional unit derived from the α-olefin having 2 to 20 carbon atoms other than 1-butene in the copolymer (C2) is preferably 1 to 40 mol%, relative to 100 mol% of the total of 1-butene and the α-olefins having 2 to 20 carbon atoms other than 1-butene. Especially, when the α-olefin having 2 to 20 carbon atoms other than 1-butene is ethylene, the constitutional unit derived from ethylene is preferably 1 to 30 mol% and more preferably 1 to 20 mol%.

Also, especially when the α-olefin having 2 to 20 carbon atoms other than 1-butene is an α-olefin having 3 to 20 carbon atoms and preferably an α-olefin having 3 to 10 carbon atoms, the constitutional unit derived from the α-olefin is preferably 3 to 40 mol% and more preferably 5 to 35 mol%.
Such a copolymer (C2) of 1-butene and α-olefin having 2 to 20 carbon atoms may be commercially available and may also be produced by a method, for example, described in paragraphs [0007] to [0009] in Japanese Patent Laid-Open Publication No. 2000-129051.

Melt flow rate (MFR) of the copolymer (C2) of 1-butene and the α-olefin having 2 to 20 carbon atoms as measured at 190°C under a 2.16 kg load in accordance with ASTM D-1238 is preferably 0.1 to 50 g/10 min and more preferably 0.5 to 20 g/10 min.
In the olefin copolymer (C) component, it is preferable to select one or more from an olefin copolymer (C1-1) in which (a) is a constitutional unit derived from propylene and (b) is one or more selected from a constitutional unit derived from an α-olefin having 4 to 20 carbon atoms, and an olefin copolymer (C2-1) in which (a) is a constitutional unit derived from 1-butene and (b) is one or more selected from a constitutional unit derived from ethylene or propylene.

It is more preferable that the olefin copolymer (C) component is one or more selected from an olefin copolymer (C1-2) in which (a) is a constitutional unit derived from propylene and (b) is a constitutional unit derived from 1-butene, and an olefin copolymer (C2-2) in which (a) is a constitutional unit derived from 1-butene and (b) is a constitutional unit derived from ethylene.
Further, among the olefin-based polymers (C), the aforementioned copolymer (C1) of propylene and the α-olefin having 2 to 20 carbon atoms other than propylene is excellent in moldability and heat-sealing properties of the film obtained therefrom and relatively good in a film blocking properties, and therefore more preferable.

### [Polypropylene resin composition (X)]

A polypropylene resin composition (X) of the present invention comprises 1 to 50 wt% of the propylene polymer (A), 10 to 90 wt% of the propylene copolymer (B), and 1 to 80 wt% of the olefin copolymer (C). It is preferable that the content of (A) is 3 to 40 wt%, the content of (B) is 20 to 85 wt% and the content of (C) is 3 to 70 wt%, and more preferable is that the content of (A) is 3 to 30 wt%, the content of (B) is 25 to 80 wt% and the content of (C) is 5 to 60 wt% (here, the sum of (A), (B), and (C) is 100 wt%). By using the polypropylene resin composition (X) of the present invention having each of the components in these ratios, a film or a sheet with good moldability and excellent transparency and heat-sealing properties can be obtained. Furthermore, when the ratio of the propylene polymer (A) relative to a total 100 wt% of the aforementioned components (A), (B), and (C) is set at P (A) (wt%) and the ratio of the propylene copolymer (B) relative to a total 100 wt% of the aforementioned components (A), (B), and (C) is set at P(B) (wt%), P(A)/(P(A)+P(B)) is preferably 0.49 or less, and more preferably 0.45 or less, in view of heat-sealing properties at low temperatures. Though there is no lower limit in particular, P (A) / (P (A) +P(B)) is preferably 0.01 or more, and more preferably 0.1 or more, for instance.

In the present invention, other synthetic resin, a rubber, or such additives and inorganic fillers as an anti-oxidant, a heat stabilizer, a weathering stabilizer, a slipping agent, an anti-blocking agent, a nucleating agent, a pigment, a hydrochloric acid adsorbent, and the like may be included in the polypropylene resin composition of the present invention, when necessary, as far as the performance of the polypropylene resin composition of the present invention is not impaired.
The aforementioned components, and if necessary, various additives can be blended with a mixer such as a Henshel Mixer, a Bambary Mixer, a tumbler mixer and the like and then introduced into a publicly known molding machine such as a sheet forming machine or injection molding machine as pellets prepared by a single screw or a twin screw extruder. In addition, the aforementioned components may be introduced into a molding machine in a state of dry-blend.

Moreover, in the present invention, the polypropylene resin composition can be obtained by so-called multi-stage polymerization, in which each component is prepared at the polymerization stage respectively, in addition to the way of 5 blending the aforementioned components.

### [Film or sheet, laminate, and stretched film]

The above-mentioned polypropylene resin composition (X) of the present invention can be formed into a sheet or a film of the present invention by using a T-die molding machine, an extrusion lamination molding machine, or an inflation molding machine that are used for usual film- or sheet- molding of polyolefins. By using the aforementioned resin composition of the present invention, a film or a sheet with good moldability and excellent transparency and heat-sealing properties can be obtained.

The thickness of a film or a sheet is not particularly restricted, but it is usually in the range of 0.1 to 2000 µm, and preferably 1 to 1000 µm.
Further, the haze, as measured in accordance with ASTM D1003, of a 50 µm thick film obtained from the polypropylene resin composition (X) of the present invention is preferably 5% or less, more preferably 4% or less, and even more preferably 3% or less.

A film or a sheet of the present invention may further be stretched uniaxially or biaxially to obtain a stretched film. The draw ratio in such a case is, for instance, 1.5-fold or more, preferably 2- to 30-fold, and more preferably 2- to 20-fold per direction. In the case of a stretched film, the thickness is preferably 0.1 to 50 µm and more preferably 0.5 to 20 µm.
In addition, the polypropylene resin composition (X) of the present invention may be laminated with a film comprising other resin or with a metal foil. In such cases, at least one layer comprising the polypropylene resin composition (X) of the present invention may be satisfactory. As other resin to be laminated, polypropylene, polyethylene, polyamide, a film obtained from polyester, a stretched film thereof, and a metal deposited film obtained by vapor-depositing an aluminum or a silicon compound on these films can be mentioned. In the case of these composite laminate structures, a publicly known co-extruding method or an extrusion lamination method may be preferably used, but the methods are not restricted to these.

A film or a sheet of the present invention or a stretched film thereof, which is mentioned above, may also be used as a metal deposited film after vapor-depositing an aluminum or a silicon compound directly. These films are also one embodiment of a laminate of the present invention.
Assuming that the layer comprising the polypropylene resin composition (X) is "X-layer" and that the layer comprising other resin or a metal foil is "Y-layer", there may be, for example, a combination of "X-layer"/"Y-layer", "X-layer"/"Y-layer"/"X-layer" and the like, but the combinations are not restricted to these. Also, the "Y-layer" may be a laminate of two or more layers. Furthermore, the "X-layer" and the "Y-layer" may be in contact directly or via another layer such as an adhesive layer, but direct contact is preferable.

In the case of the laminate containing at least one layer comprising the polypropylene resin composition (X) of the present invention, the thickness of the layer comprising the polypropylene resin composition (X) is not particularly restricted and is, for example, 0.1 to 2000 µm, preferably 1 to 1000 µm per layer. Further, the thickness of other resin layer or the metal foil layer mentioned above is not particularly restricted and is, for instance, 0.1 to 2000 µm per layer.

In addition, in the case where a stretched film is obtained by stretching a laminate at least uniaxially, thickness of the layer comprising the polypropylene resin composition (X) is, for instance, preferably 0.1 to 50 µm, and more preferably 0.5 to 20 µm, although not particularly restricted.
Furthermore, the thickness of the above-mentioned layer comprising other resin or the metal foil is not particularly restricted and is, for instance, 5 to 200 µm, and preferably about 10 to 60 µm.

A film or a sheet of the present invention, a stretched film obtained from the film or the sheet, a laminate of the present invention, and a stretched film obtained from the laminate can be used for applications in which good transparency and heat-sealing properties are desired, and for example, can suitably be used as a packaging film for food such as vegetables, cakes, bread, and the like, and for fibers, or as a transparent case such as a cosmetic sheet and the like.
In the case where the film or the sheet of the present invention is a laminate, it is preferable that at least one layer of the outermost layers comprises the aforementioned polypropylene resin composition (X). In such a laminate, the aforementioned layer comprising the polypropylene resin composition (X) can be used as a sealant layer capable of heat-sealing.

As a preferable example, a laminate in which the polypropylene resin composition (X) of the present invention is laminated on at least one side of a layer of crystalline polypropylene (Z) can be mentioned. This lamination process provides the laminate with excellent transparency, rigidity, and heat-sealing properties.
As a crystalline polypropylene (Z) used for the laminate, publicly known polypropylene for film can be used and it is desirable to use polypropylene having an isotactic index I.I. (component insoluble in boiling n-heptane) of 75% or more and more preferably 75 to 99%.

It is also desirable that the crystalline polypropylene (Z) has a density of 0.89 to 0.92 g/cm³ and an MFR (at 230°C) of 0.1 to 10 g/10 min. As such crystalline polypropylene (Z), homopolypropylene is usually used, but a propylene random copolymer containing a small amount, for instance, 5 mol% or less of a unit derived from an olefin other than propylene may also be used as long as the object of the present invention is not impaired. As other specific examples of such olefins, α-olefins having 2 to 20 carbon atoms other than propylene such as ethylene, 1-butene, 1-pentene, 1-hexene, 1-heptene, 1-octene, 1-decene, 1-dodecene, 1-hexadecene, 4-methyl-1-pentene and the like may be mentioned.

The crystalline polypropylene (Z) used in the present invention can be produced by using a publicly known solid titanium catalyst component or a metallocene compound catalyst component in a publicly known method.
This crystalline polypropylene (Z) can be used with the addition of a heat stabilizer, a UV absorbing agent, an anti-blocking agent, a slipping agent, an anti-static agent, and the like.
As a method for preparing a laminate of the present invention, a method in which the crystalline polypropylene (Z) and the aforementioned polypropylene resin composition (X) of the present invention are co-extruded or a method in which the polypropylene resin composition (X) is melt-extruded onto a film (a base material layer) obtained by melt-extruding the crystalline polypropylene (Z) to form a laminate, is suitably used.

In this case, the thickness of the layer of the crystalline polypropylene (Z) is not particularly restricted, but usually 0.1 to 2000 µm per layer, while the thickness of the layer of the polypropylene resin composition (X) of the present invention is not particularly restricted, but preferably about 0.1 to 500 µm per layer.
The laminate thus obtained can be stretched uniaxially toward either machine or transverse direction, or biaxially toward machine and transverse directions separately or simultaneously.

As a draw ratio, there is no particular restriction, but usually 1.5-fold or more, preferably 2- to 30-fold, and more preferably 2- to 20-fold per direction.
In the laminate of the present invention, the thickness of the layer of the crystalline polypropylene (Z) is preferably 5 to 200 µm and more preferably 10 to 60 µm per layer, and the thickness of the polypropylene resin composition (X) is preferably 0.1 to 50 µm and more preferably 0.5 to 20 µm per layer.

Further, in the case where the laminate of the present invention is stretched at least uniaxially, the thickness of the layer of the crystalline polypropylene (Z) is preferably 5 to 200 µm and more preferably 10 to 60 µm per layer, and that of the polypropylene resin composition (X) is preferably 0.1 to 50 µm and more preferably 0.5 to 20 µm per layer.
The above-mentioned laminate of the present invention is excellent in heat-sealing properties. Particularly, the laminate is capable of heat-sealing even at low temperatures and in a wide range of temperature and is also excellent in heat-seal strength. Furthermore, this film secures stable heat-sealing work, as the heat-sealing temperature does not change with time even when stored for a long period of time.

It is preferable that, in the laminate of the present invention or the laminate which is stretched at least uniaxially by 1.5-fold or more, at least one of the outermost layers is a layer comprising the aforementioned polypropylene resin composition (X). In such a laminate, the aforementioned layer comprising the polypropylene resin composition (X) can be used as a sealant layer capable of heat-sealing.
The laminate or the stretched laminate of the present invention is excellent in transparency, anti-scratching properties, and the like and is capable of performing high-speed packaging, and thus they are suitably used for food packaging, filling packaging, fibers packaging, and the like.

### [Packaging material]

A film or a sheet comprising the polypropylene resin composition (X) of the present invention (hereinafter sometimes referred to as "Film, Sheet (1)"), a laminate containing at least one layer of the polypropylene resin composition (X) (hereinafter sometimes referred to as "Laminate (2)"), and a stretched film obtained by stretching "Film, Sheet (1)" or "Laminate (2)" at least uniaxially by 1.5-fold or more (hereinafter sometimes referred to as "Stretched Film (3)") may be widely used as the aforementioned packaging material. Here, as the packaging material, materials in the form of a sheet, a container and the like may be exemplified and as the material in the form of a container, the material in the form of a bag can be mentioned preferably, but is not restricted to this.

As the packaging material of the present invention, it is preferable that the layer comprising the polypropylene resin composition (X) is a sealant layer. Examples of such an embodiment are shown in the following.
A packaging material that is obtained by bringing into contact with one or two or more materials selected from the aforementioned "Film, Sheet (1)", "Laminate (2)", and "Stretched Film (3)" in such a way that the layers comprising the polypropylene resin composition (X) face each other and then heat-sealing at least a part of the area in contact.

A packaging material that is obtained by bringing into contact with two or more materials selected from the aforementioned "Film, Sheet (1) ", "Laminate (2) ", and "Stretched Film (3)" in such a way that the layers comprising the polypropylene resin composition (X) face each other and then heat-sealing at least a part of the circumference of the area in contact.
A packaging material that is obtained by folding into two a material selected from the aforementioned "Film, Sheet (1)", "Laminate (2)", and "Stretched Film (3)" in such a way that the surface comprising the polypropylene resin composition (X) becomes the inside and that the polypropylene resin compositions face each other and then heat-sealing at least a part of the circumference of the area in contact.

A packaging material obtained from the laminate of the present invention ("Laminate (2)") comprising a layer comprising the aforementioned polypropylene resin composition (X) as one outermost layer and another layer comprising the aforementioned crystalline polypropylene (Z) as the other outermost layer by bringing into contact the one layer with the other layer and then heat-sealing at least a part of the area in contact.
A packaging material, formed by heat-sealing a layer comprising the polypropylene resin composition (X) of the present invention in the cover material made of the material selected from the aforementioned "Film, Sheet (1)", "Laminate (2)", and "Stretched Film (3)", and a cup-shaped article. In this case, a surface layer of the aforementioned cup-shaped article that is heat-sealed with the aforementioned cover material preferably comprises, for instance, crystalline polypropylene or a composition containing crystalline polypropylene.

As crystalline polypropylene used in a cup-shaped article, a publicly known polypropylene can be used, but it is desirable to use polypropylene having an isotactic index I.I. (insoluble component in boiling n-heptane) of 75% or more and more preferably 75 to 99%.
In addition, the density and MFR (at 230°C) of the crystalline polypropylene used for this cup-shaped article are preferably 0. 89 to 0. 92 g/cm³ and 0.1 to 100 g/10 min, respectively. As such a crystalline polypropylene, homopolypropylene is usually used, but a propylene random copolymer containing a small amount, for instance, 5 mol% or less of a unit derived from an olefin other than propylene may also be used as long as the object of the present invention is not impaired. As other specific examples of such olefins, α-olefins having 2 to 20 carbon atoms other than propylene such as ethylene, 1-butene, 1-pentene, 1-hexene, 1-heptene, 1-octene, 1-decene, 1-dodecene, 1-hexadecene, 4-methyl-1-pentene and the like may be mentioned.

The crystalline polypropylene used in the above-mentioned cup-shaped article can be produced by using a publicly known solid titanium catalyst component or a metallocene compound catalyst component in a publicly known method.
This crystalline polypropylene used in the cup-shaped article can be used with the addition of a heat stabilizer, a UV absorbing agent, an anti-blocking agent, a slipping agent, an anti-static agent, and the like. Other resin and elastomers can also be blended to make the crystalline polypropylene composition.

### Examples

The present invention will be more specifically explained below, but the present invention is not restricted to these examples.

### [Measurement of physical properties of a propylene polymer (A), a propylene copolymer (B), and an olefin copolymer (C)]

### (1) The contents of ethylene, propylene, and 1-butene were measured by using ¹³C-NMR.

### (2) Molecular weight distribution (Mw/Mn)

The molecular weight distribution (Mw/Mn) was determined by using GPC-150C manufactured by Millipore Co., under the following conditions, employing
a separation column with a diameter of 27 mm and a length of 600 mm (TSK GNH HT); a column temperature of 140°C; a mobile phase of o-dichlorobenzene (Wako Pure Chemical Industries, Ltd.) containing 0.025 wt% of BHT (Takeda Pharmaceutical Co. Ltd.) as an antioxidant at a moving rate of 1.0 ml/min; a sample concentration of 0.1 wt%; a sample injection amount of 500 µl; and a detector of a differential refractometer.

### (3) Melting point (Tm)

The melting point was determined by using DSC-7 instrument (differential scanning calorimeter (DSC) manufactured by PerkinElmer, Inc.).
Namely, approximately 5 mg of a sample was packed in an aluminum pan, and (1) heated to 200°C and kept at 200°C for 5 min, (2) cooled to -40°C at a rate of 10°C/min and kept at -40°C for 5 min, then (3) heated at a rate of 10°C/min, and Tm was obtained from the endothermic curve during step (3).

### (4) Melt flow rate (MFR)

MFRs of a propylene polymer (A), a propylene copolymer (B), and a copolymer of propylene and an α-olefin having 2 to 20 carbon atoms (other than propylene) (C1) were measured at 230°C under a 2.16 kg load in accordance with ASTM D-1238.
As for a copolymer of 1-butene and an α-olefin having 2 to 20 carbon atoms (other than 1-butene) (C2), it was measured at 190°C under a 2.16 kg load in accordance with ASTM D-1238.

### [Measurement of physical properties of a film]

### (1) Haze

The haze was measured in accordance with ASTM D1003.

### (2) Blocking properties

The blocking properties were measured in accordance with ASTM D1893 after a film was kept at 50°C for 3 days and allowed to cool.

### (3) Heat-sealing properties

Seal layers of films were set face-to-face and then heat-sealed at a prescribed temperature under a pressure of 0.2 MPa with sealing time of 1.0 second. Thereafter, a strip of the specimen cut into a 15 mm rectangular was peeled off between the layers toward 180° direction at a rate of 300 mm/min to measure the peel strength, the value at that time was taken as the heat-seal strength (N/15 mm).

### [Moldability]

Stickiness to a chilled roll at the time of molding a resin composition by using a T-die sheet was observed and the results were marked with "Good" for good and "Poor" when stickiness was observed (temperature of a chilled roll: 30°C).

### [Example 1]

A raw material comprising 10 wt% of homopolypropylene having a melting point of 161°C and an MFR of 7.0 g/10 min, 60 wt% of propylene/ethylene/1-butene copolymer (random polypropylene) having a melting point of 138°C and an MFR of 7.0 g/10 min, and 30 wt% of propylene/1-butene copolymer with 1-butene content of 23 mol% having an MFR of 7.0 g/10 min and a melting point of 75°C obtained by the use of a metallocene catalyst, was melt kneaded. The obtained resin composition as seal layer resin and homopolypropylene having a melting point of 161°C and an MFR of 3.0 g/10 min as a core layer resin were processed by a two kind-two layer T-die molding machine with a die-width of 200 mm equipped with an extruder of 30 mmφ and 25 mmφ to obtain a multilayer sheet having a 1 mm thickness. Here, the thickness of the seal layer was set to 0.1 mm and that of the core layer was set to 0.9 mm, respectively.

The sheet obtained above was stretched by using a twin screw stretching machine at 160°C at a stretching rate of 10 m/min by 5-fold in the machine direction and 10-fold in the transverse direction in the order of machine direction and then transverse direction to obtain a stretched film having a 20 µm thickness.
The physical properties of the obtained films were shown in Table 1.

### [Examples 2, 3, and 4, and Comparative Examples 1, 2, and 3]

Films are obtained in a similar manner to that of Example 1 except that the resin compositions were altered as shown in Table 1.

Physical properties of the obtained films are shown in Table 1 and Table 2.

[Table 1]

**Table 1**

| | Example 1 | Example 2 | Comparative Example 1 | Comparative Example 2 |
|---|---|---|---|---|
| Resin compositions | | | | |
| m-PBR (wt%) | 30 | 30 | 30 | 30 |
| h-PP (wt%) | 10 | 30 | 70 | - |
| r-PP (wt%) | 60 | 40 | - | 70 |
| Haze (%) (a stack of 4 sheets) | 4.0 | 4.2 | 4.2 | 5.1 |
| Blocking coefficient (N/m) | 0.25 | 0.08 | 0 | 0.50 |

| Heat-seal strength | | | | |
|---|---|---|---|---|
| (N/15 mm) | | | | |
| 80°C | 5.39 | 1.93 | 0 | 4.06 |
| 90°C | 6.05 | 4.20 | 0 | 4.51 |
| 100°C | 6.64 | 5.31 | 0 | 4.44 |
| 110°C | 7.21 | 6.21 | 0.20 | 3.87 |
| 120°C | 7.68 | 6.81 | 0.35 | 3.45 |
| 130°C | 8.39 | 7.52 | 0.55 | 3.18 |
| Moldability | Good | Good | Good | Poor |

| | | | | |
|---|---|---|---|---|
| h-PP: melting point 161°C, MFR 7.0 g/10 min, homopolypropylene r-PP: melting point 138°C, MFR 7.0 g/10 min, random polypropylene m-PBR: melting point 75°C, MFR 7.0 g/10 min, propylene/1-butene copolymer, 1-butene content 23 mol%, molecular weight distribution (Mw/Mn) 2.1 | | | | |

[Table 2]

**Table 2**

| | Example 3 | Example 4 | Comparative Example 3 |
|---|---|---|---|
| Resin compositions | | | |
| m-PBR (wt%) | 15 | 15 | 15 |
| h-PP (wt%) | 10 | 30 | - |
| r-PP (wt%) | 75 | 55 | 85 |
| Haze (%) (a stack of 4 sheets) | 3.9 | 4.1 | 4.3 |
| Blocking coefficient (N/m) | 0.46 | 0.11 | 0.26 |

| Heat-seal strength | | | |
|---|---|---|---|
| (N/15 mm) | | | |
| 80°C | 0.83 | 0.18 | 0.29 |
| 90°C | 2.61 | 0.50 | 0.70 |
| 100°C | 5.05 | 1.39 | 1.09 |
| 110°C | 6.15 | 4.82 | 1.82 |
| 120°C | 6.86 | 5.66 | 3.25 |
| 130°C | 6.65 | 7.06 | 5.21 |
| Moldability | Good | Good | Poor |

| | | | |
|---|---|---|---|
| h-PP: melting point 161°C, MFR 7.0 g/10 min, homopolypropylene r-PP: melting point 138°C, MFR 7.0 g/10 min, random polypropylene m-PBR: melting point 75°C, MFR 7.0 g/10 min, propylene/1-butene copolymer, 1- butene content 23 mol%, molecular weight distribution (Mw/Mn) 2.1 | | | |

### [Examples 5 and 6, and Comparative Example 4 and 5]

Films were obtained in a similar manner to that of Example 1, except that a 1-butene/ethylene copolymer (Beaulon BL3450 (registered trade name), manufactured by Mitsui Chemicals, Inc., hereinafter referred to as BER in some cases) was used instead of propylene/1-butene copolymer as one component in the ratio of BER, h-PP and r-PP as shown in Table 3. The physical properties of the obtained films are shown in Table 3.

[Table 3]

**Table 3**

| | Example 5 | Example 6 | Comparative Example 4 | Comparative Example 5 |
|---|---|---|---|---|
| Resin compositions | | | | |
| BER (wt%) | 15 | 30 | 30 | 30 |
| h-PP (wt%) | 10 | 10 | 70 | - |
| r-PP (wt%) | 75 | 60 | - | 70 |
| Haze (%) (a stack of 4 sheets) | 5.7 | 4.2 | 5.6 | 9.3 |
| Blocking coefficient (N/m) | 1.16 | 1.52 | 0.40 | 0.77 |

| Heat-seal strength | | | | |
|---|---|---|---|---|
| (N/15 mm) | | | | |
| 80°C | 0.34 | 3.17 | 0 | 1.37 |
| 90°C | 1.15 | 4.10 | 0 | 2.77 |
| 100°C | 1.31 | 4.87 | 0 | 3.27 |
| 110°C | 1.91 | 4.78 | 0.62 | 3.22 |
| 120°C | 3.41 | 4.85 | 0.90 | 4.04 |
| 130°C | 4.89 | 5.36 | 1.10 | 4.55 |
| Moldability | Good | Good | Good | Poor |

| | | | | |
|---|---|---|---|---|
| h-PP: melting point 161°C, MFR 7.0 g/10 min, homopolypropylene r-PP: melting point 138°C, MFR 7.0 g/10 min, random polypropylene BER: melting point 104°C, MFR 4.0 g/10 min, 1-butene/ethylene copolymer, ethylene content 5 mol%, molecular weight distribution (Mw/Mn) 4.9 | | | | |

### Industrial Applicability

A film obtained from a polypropylene resin composition of the present invention is excellent in transparency and heat-sealing properties and is suitably used as a packaging film for food and the like, and thus its industrial value is extremely large.

## Claims

1. A polypropylene resin composition (X) comprising 1 to 50 wt% of a propylene polymer (A) whose melting point Tm as measured with a differential scanning calorimeter (DSC) is 150°C or higher, 10 to 90 wt% of a propylene copolymer (B) whose melting point Tm is 100°C or higher and below 150°C, and 1 to 80 wt% of an olefin copolymer (C) whose melting point is 40°C or higher and below 100°C, comprising 50 mol% or more of a constitutional unit derived from either propylene or 1-butene (a) and 50 mol% or less of one or more selected from a constitutional unit derived from an α-olefin having 2 to 20 carbon atoms (b) other than the constitutional unit (a) (here, the sum of (a) and (b) is 100 mol% and the sum of (A), (B), and (C) is 100 wt%).

2. The polypropylene resin composition (X) according to claim 1, wherein the olefin copolymer (C) is one or more selected from an olefin copolymer (C1-1) in which (a) is a constitutional unit derived from propylene and (b) is one or more selected from a constitutional unit derived from an α-olefin having 4 to 20 carbon atoms, or an olefin copolymer (C2-1) in which (a) is a constitutional unit derived from 1-butene and (b) is one or more selected from a constitutional unit derived from ethylene or propylene.

3. The polypropylene resin composition (X) according to claim 2, wherein the olefin copolymer (C) is the olefin copolymer (C1-1) in which (a) is a constitutional unit derived from propylene and (b) is one or more selected from a constitutional unit derived from an α-olefin having 4 to 20 carbon atoms.

4. A film or a sheet formed from the polypropylene resin composition (X) according to any one of claims 1 to 3.

5. The film or the sheet according to claim 4, wherein the thickness of the film or the sheet is 0.1 to 2000 µm.

6. A stretched film made from the film or the sheet according to claim 4 by stretching at least uniaxially by 1. 5-fold or more.

7. A laminate containing at least one layer comprising the polypropylene resin composition (X) according to any one of claims 1 to 3.

8. The laminate according to claim 7, wherein the layer of the polypropylene resin composition (X) is laminated on at least one side of a layer of crystalline polypropylene (Z).

9. The laminate according to claim 7 or claim 8, wherein at least one layer of the outermost layers comprises the polypropylene resin composition (X).

10. A stretched film comprising stretching the laminate according to any one of claims 7 to 9 at least uniaxially by 1.5-fold or more.
